# EUROPÄISCHE PATENTANMELDUNG

(11) **EP 4 506 866 A1**
(43) Veröffentlichungstag der Anmeldung: **12.02.2025**
(21) Anmeldenummer: 23190897.1
(22) Anmeldetag: 10.08.2023
(51) Int. Cl.: G06N 10/70, G06N 3/08

(54) **VERFAHREN UND VORRICHTUNG ZUM COMPUTERIMPLEMENTIERTEN VORHERSAGEN DER PERFORMANZ EINES QUANTENCOMPUTERS**

(71) Anmelder: Siemens Aktiengesellschaft, 80333 München (DE)
(72) Erfinder: Niedermeier, Christoph, 80999 München (DE); Safi, Hila, 81829 München (DE); Schwenzow, Tilmann Moritz, 73730 Esslingen (DE); Wintersperger, Karen, 80804 München (DE); von Sicard, Oliver, 81541 München (DE)
(74) Vertreter: Siemens Patent Attorneys

(57) **Zusammenfassung**

Es wird ein Verfahren zum computerimplementierten Vorhersagen der Performanz eines Quantencomputers (QC) mit zumindest einer Quantenverarbeitungseinheit (QPU) beschrieben, wobei die zumindest eine Quantenverarbeitungseinheit durch jeweilige Leistungsparameter charakterisiert ist, wobei für einen geplanten Betrieb des Quantencomputers an einem vorgegebenen Ort (PL) die folgenden Schritte durchgeführt werden:
i) Einlesen zumindest eines Umgebungsparameters (EP1, EP2), wobei der zumindest eine Umgebungsparameter mit einem oder mehreren Sensoren (ES1, ES2) aufgenommen wurde, wobei der oder die Sensoren (ES1, ES2) an dem oder im Bereich des vorgegebenen Orts (PL) installiert sind;
ii) Bestimmen zumindest eines Zustandsparameters (CP1, CP2) der zumindest einen Quantenverarbeitungseinheit (QPU) durch Verarbeiten des zumindest einen Umgebungsparameters (EP1, EP2) durch ein trainiertes datengetriebenes Modell (MO), wobei der zumindest eine Umgebungsparameter (EP1, EP2) als digitale Eingangsinformation in das trainierte datengetriebene Modell (MO) eingespeist wird und das trainierte datengetriebene Modell (MO) den zumindest einen Zustandsparameters (CP1, CP2) als digitale Ausgangsinformation liefert, wobei der zumindest eine Zustandsparameter (CP1, CP2) eine Performanz der zumindest einen Quantenverarbeitungseinheit (QPU) beschreibt.

## Beschreibung

Die Erfindung betrifft ein Verfahren und eine Vorrichtung zum computerimplementierten Vorhersagen der Performanz eines Quantencomputers mit zumindest einer Quantenverarbeitungseinheit, die durch jeweilige Leistungsparameter charakterisiert sind.

Quantencomputing stellt ein neues Paradigma in der Datenverarbeitung dar, das die grundlegenden Prinzipien der Quantenmechanik zur Durchführung von Berechnungen nutzt. Während ein herkömmlicher Computer mit Bits arbeitet, die jeweils eine der beiden diskreten Zustände 0 oder 1 annehmen können, verwendet ein Quantencomputer sogenannte Quantenbits (Qubits). Ein Qubit kann dabei nicht nur einen von zwei Quantenzuständen |0> oder |1> annehmen, sondern auch jede beliebige Überlagerung (Linearkombination) dieser beiden Zustände. Eine derartige Linearkombination wird auch als Superposition oder Überlagerungszustand bezeichnet.

Algorithmen und Anwendungen, die quantenmechanische Ressourcen nutzen, können einfach und effizient durch sogenannte Quantenschaltungen (quantum circuits) dargestellt werden. Eine Quantenschaltung ist eine Berechnungsroutine, die aus kohärenten Quantenoperationen auf Quantenbits besteht.

Eine Quantenschaltung wird auf einem Quantencomputer zur Ausführung gebracht und kann durch weitere Anweisungen auf einen klassischen Rechner ergänzt werden. In diesem Fall spricht man von einem hybriden Algorithmus. Ein derartiger Algorithmus kann dabei auch iterativ angelegt sein, das heißt aus sich wiederholenden klassischen und Quanten-Anteilen bestehen.

Quantenschaltungen ermöglichen es einer Quantenverarbeitungseinheit, klassische Informationen aufzunehmen und eine klassische Lösung auszugeben, wobei die Quantenverarbeitungseinheit Quantenprinzipien wie Interferenz und Verschränkung (entanglement) zur Durchführung der Berechnung nutzt.

Derzeit existierende Quantencomputer, die eine oder mehrere Quantenverarbeitungseinheiten umfassen, verwenden sehr unterschiedliche Technologien, um Qubits und ihre Interaktionen zu repräsentieren. Einige der bekanntesten Technologien sind supraleitende Schaltungen, Ionenfallen und photonische Schaltkreise. Andere Ansätze basieren auf neutralen Atomfallen, Qubits auf Diamantbasis oder Quantenpunkte.

Die für die Implementierung der Qubits gewählte Technologie bestimmt die Technologie, die zum Ansteuern und Auslesen der Qubits Quantenverarbeitungseinheit (Quantum Processing Unit, QPU) benötigt wird. Während sich die Eigenschaften von Quantenverarbeitungseinheiten in Bezug auf die Anzahl der Qubits und die Fehlerraten in der Zukunft deutlich verbessern dürften, sind Eigenschaften wie Kohärenzzeit, Gatter-Operationszeit und Konnektivität stärker von der Wahl der verwendeten Technologie abhängig, aber können sich ebenfalls im Lauf der Zeit verbessern. Die Kohärenzzeit beschreibt, wie lange Informationen in einem Qubit gespeichert und genutzt werden können, bevor eine so genannte Dekohärenz eintritt und die gespeicherten Informationen verloren gehen. Die Gatter-Operationszeit ist im Wesentlichen für die Dauer der Ausführung einer Quantenschaltung ausschlaggebend. Die Konnektivität beschreibt, mit wie vielen weiteren Qubits ein bestimmtes Qubit direkt wechselwirken bzw. interagieren kann.

Während supraleitende Qubits kurze Gatter-Operationszeiten im Bereich einiger Nanosekunden haben, ist die Kohärenzzeit vor der Dekohärenz vergleichsweise kurz und liegt im Mikrosekundenbereich. Ihre Konnektivität ist auf benachbarte Qubits beschränkt, wobei in einer quadratischen Gittergeometrie ein Qubit höchstens vier Nachbarn haben kann.

Im Gegensatz dazu sind die Gatteroperationszeiten für Qubits, die durch Ionenfallen repräsentiert werden, vergleichsweise langsam (im Bereich von Mikrosekunden), dies Qubits haben aber andererseits eine vergleichsweise lange Kohärenzzeit im Bereich von Minuten und eine "All-to-All"-Konnektivität.

Neben den genannten Unterschieden sind auch die Skalierbarkeit und damit die Kosten für die Ausführung einer Quantenschaltung sowie die Betriebsbedingungen, unter denen jeweilige Quantenverarbeitungseinheiten betrieben werden, stark von der Technologie abhängig.

Verschiedene Arten von Quantenverarbeitungseinheiten können unterschiedliche Modelle der Quantenberechnung implementieren. Die Quantenberechnung kann beispielsweise gatterbasiert, messungsbasiert ablaufen oder sogenannte topologische Qubits nutzen. Quantencomputer, deren Quantenverarbeitungseinheiten auf photonischen Schaltkreisen basieren, nutzen in der Regel messungsbasierte Quantenberechnungen.

Die zunehmende Verfügbarkeit und die Leistungsfähigkeit von Quantencomputern machen diese für verschiedene Anwendungen interessant. Solche Anwendungen reichen von der Quantensimulation (Materialforschung, Katalysatoren, Arzneimittel, usw.) über Optimierungsaufgaben (Portfolioallokation, Produktion und Logistik) bis hin zum Lösen von Differentialgleichungen und maschinellem Lernen.

Aktuell befinden sich die verfügbaren Quantencomputer fast ausschließlich in Labors unter kontrollierten Umgebungsbedingungen, die von technischen Experten betreut werden. Die Nutzung der Rechnerleistung von Quantencomputern ist über einen Fernzugriff möglich. Es gibt Bestrebungen, Quantencomputer in Zukunft in Räumlichkeiten der Nutzer zu installieren, insbesondere aufgrund von Anforderungen an die Latenzzeit (z.B. bei Finanzanwendungen und Echtzeitoptimierungen) oder aus Gründen des Datenschutzes und/oder der Sicherheit. In solchen Anwendungen werden die Quantencomputer mutmaßlich in Datenzentren oder Geschäftsräumen aufgestellt werden.

Ein praktisches Problem besteht darin, dass Quantencomputer leicht durch Umwelteinflüsse gestört werden können. Je nach spezifischer Implementierung des Quantencomputers, z.B. unter Verwendung von supraleitenden Qubits, Ionenfallen, integrierten photonischen Schaltkreisen, reagieren Quantencomputer empfindlich auf bestimmte Arten von äußeren Einflüssen, wie z.B. Vibrationen, elektromagnetische Felder, Temperaturschwankungen oder kosmische Strahlung.

Um die Leistungsfähigkeit von Quantencomputern ausnützen zu können, ist daher eine Platzierung erforderlich, die die oben genannten negativen Effekte minimiert. Z.B. müssen Temperaturschwankungen gering gehalten oder Vibrationen ferngehalten werden. Die Beurteilung der Auswirkung verschiedener Arten von Umgebungseinflüssen auf einen bestimmten Typ von Quantencomputer erfordert ein detailliertes Verständnis seiner physikalischen Architektur, was für viele Benutzer von Quantencomputern ein großes Hindernis darstellt. Gleiches trifft für die Rekalibrierung des Quantencomputers zu, welche regelmäßig durchgeführt werden muss.

Es besteht ein Bedürfnis, die Leistung von Quantencomputern an beliebigen Orten abschätzen zu können, und insbesondere die Auswirkungen von nahegelegenen Störfaktoren, wie z.B. Maschinen, berücksichtigen zu können.

Es ist Aufgabe der Erfindung, ein Verfahren und eine Vorrichtung anzugeben, welche eine Vorhersage der Performanz eines Quantencomputers mit zumindest einer Quantenverarbeitungseinheit ermöglichen.

Diese Aufgaben werden gelöst durch ein Verfahren gemäß den Merkmalen des Anspruches 1, eine Vorrichtung gemäß den Merkmalen des Anspruches 8 und ein Computerprogrammprodukt gemäß den Merkmalen des Anspruches 10. Vorteilhafte Ausgestaltungen ergeben sich aus den abhängigen Ansprüchen.

Gemäß einem ersten Aspekt der Erfindung wird ein Verfahren zum computerimplementierten Vorhersage der Performanz eines Quantencomputers mit zumindest einer Quantenverarbeitungseinheit vorgeschlagen. Die zumindest eine Quantenverarbeitungseinheit ist durch jeweilige Leistungsparameter charakterisiert. Insbesondere umfassen die Leistungsparameter einen oder mehrere der folgenden Parameter: eine Prozessorleistung; einen Arbeitsspeicher; eine Anzahl an Qubits; Eigenschaften der Qubits (Gatter-Operationszeiten, Kohärenzzeit vor dem Eintritt einer Dekohärenz; Konnektivität zu anderen Qubits), eine Vernetzungsrate der Qubits; eine Fehlerrate für jeweilige Gatter-Operationen; eine Kohärenzzeit.

Für einen geplanten Betrieb des Quantencomputers an einem vorgegebenen Ort werden die folgenden Schritte durchgeführt:
In einem Schritt i) erfolgt ein Einlesen zumindest eines Umgebungsparameters. Der Begriff "Umgebungsparameter" bezieht sich auf einen digitalen Umgebungsparameter. Der Begriff "Einlesen eines Umgebungsparameters" bedeutet, dass der Umgebungsparameter von einem Prozessor empfangen wird, der das erfindungsgemäße Verfahren ausführt. Der zumindest eine Umgebungsparameter wird oder wurde mit einem oder mehreren Sensoren aufgenommen. Der Begriff "Sensor" bezieht sich auf eine Erfassungseinheit, die dazu ausgebildet ist, einen bestimmten Umgebungsparameter messtechnisch zu erfassen und den Messwert als digitalen Wert, der den Umgebungsparameter repräsentiert, für eine weitere Verarbeitung bereitzustellen.

Der oder die Sensoren sind insbesondere an dem oder im Bereich des vorgegebenen Orts installiert. Die Sensoren können dazu eingerichtet sein, jede Art von Umgebungsparameter messtechnisch zu erfassen. Insbesondere können ein oder mehrere Sensoren dazu ausgebildet sein, Vibrationen, Temperaturen, elektromagnetische Felder oder Strahlen zu erfassen. Von den genannten Sensortypen können ein oder mehrere Sensoren zum Einsatz kommen.

In einem Schritt ii) erfolgt ein Bestimmen zumindest eines Zustandsparameters der zumindest einen Quantenverarbeitungseinheit durch Verarbeiten des zumindest einen Umgebungsparameters durch ein trainiertes datengetriebenes Modell. Der zumindest eine Umgebungsparameter wird als digitale Eingangsinformation in das trainierte datengetriebene Modell eingespeist und das trainierte datengetriebene Modell liefert den zumindest einen Zustandsparameter als eine digitale Ausgangsinformation. Der zumindest eine Zustandsparameter beschreibt eine Performanz der zumindest einen Quantenverarbeitungseinheit.

Das erfindungsgemäße Verfahren ermöglicht auf einfache Weise eine Abschätzung der Performanz des Quantencomputers in unterschiedlichen Umgebungen. Die Performanz der zumindest einen Quantenverarbeitungseinheit des Quantencomputers ergibt sich aus der Kombination eines simulierten Betriebs des Quantencomputers unter Berücksichtigung der Eingangsdaten mit dem zumindest einen digitalen Umgebungsparameter.

Im Rahmen des Verfahrens wird, wie erläutert, ein trainiertes datengetriebenes Modell verwendet. Das Modell wurde mit Trainingsdaten, die eine Vielzahl von Performanzwerten des Quantencomputers in Abhängigkeit von unterschiedlichen Umgebungsbedingungen umfasst, trainiert.

Grundsätzlich kann jedes bekannte datengetriebene Modell, das mit Hilfe von Maschinenlernverfahren angelernt wurde, in dem Verfahren der vorliegenden Erfindung zum Einsatz gelangen. In einer bevorzugten Ausgestaltung ist das trainierte datengetriebene Modell ein neuronales Netzwerk. Nichtsdestotrotz können auch andere datengetriebene Modelle im Verfahren der vorliegenden Erfindung implementiert werden, wie z.B. Modelle, die auf Entscheidungsbäumen (decision trees) oder Support Vector Machines basieren.

In einer zweckmäßigen Ausgestaltung wird das Bestimmen des zumindest einen Zustandsparameters der zumindest einen Quantenverarbeitungseinheit wiederholt, wenn ein die Performanz beschreibendes Maß unterschritten ist. Mit anderen Worten führt insbesondere eine erhöhte Fehlerrate zu einer wiederholten Ausführung der "Simulation", um die Genauigkeit des Performanzparameters, d.h. des zumindest einen Zustandsparameters, bei gegebenen Umgebungsparametern zu erhöhen.

In einer weiteren bevorzugten Ausgestaltung wird das Bestimmen des zumindest einen Zustandsparameters der zumindest einen Quantenverarbeitungseinheit für eine Mehrzahl von vorgegebenen Orten wiederholt, wenn ein die Performanz beschreibendes Maß des zumindest einen Zustandsparameters unterschritten ist. Mit Hilfe dieser Ausgestaltung wird versucht, wenn ein zunächst geplanter Ort sich aufgrund des Performanzmaßes des zumindest einen Zustandsparameters als ungeeignet herausstellt, andere Orte im Hinblick auf die Auswirkungen der dort vorliegenden Umgebungseinflüsse zu berücksichtigen. So kann beispielsweise durch eine geringfügige Änderung des geplanten Ortes, welcher geringeren Vibrationen und/oder Geräuschen und dergleichen ausgesetzt ist, ein akzeptables Performanzmaß erzielt werden.

Eine weitere zweckmäßige Ausgestaltung sieht vor, dass für die zumindest eine Quantenverarbeitungseinheit des Quantencomputers eine Selbstkalibration durchgeführt wird, wenn ein die Performanz beschreibendes Maß des zumindest einen Zustandsparameters unterschritten ist. Hierdurch wird es ermöglicht, grundlegende Rekalibrierungen und Wartungsarbeiten zu erkennen: Beispielsweise können Modifikationen an der Quantencomputer-Hardware in die Simulation des trainierten datengetriebenen Modells einbezogen werden, um mögliche Nebenwirkungen vorherzusagen. Diese Funktion kann auch genutzt werden, um Benutzer im Umgang mit dem Quantencomputer zu schulen.

Eine weitere zweckmäßige Ausgestaltung sieht vor, dass der zumindest eine Zustandsparameter eine Fehlerrate für jeweilige Gatter-Operationen umfasst. Darüber hinaus können auch andere Zustandsparameter berücksichtigt werden.

Es ist weiterhin zweckmäßig, wenn der zumindest eine Umgebungsparameter innerhalb einer vorgegebenen Bandbreite um den jeweiligen Messwert variiert wird und für jede Variation, der zumindest eine Zustandsparameter bestimmt wird. Hierdurch kann festgestellt werden, inwieweit bestimmte Veränderungen der Umgebungsparameter sich bereits nachteilig auf die Performanz des Quantencomputers auswirken. Hierdurch können vorgegebene Orte, deren Umgebungsparameter gewissen Schwankungen unterliegen, vorab auf ihre Eignung für die Platzierung des Quantencomputers untersucht werden.

Gemäß einem zweiten Aspekt der vorliegenden Erfindung wird eine Vorrichtung zum computerimplementierten Vorhersagen der Performanz eines Quantencomputers mit zumindest einer Quantenverarbeitungseinheit vorgeschlagen. Die zumindest eine Quantenverarbeitungseinheit ist durch jeweilige Leistungsparameter charakterisiert. Die Vorrichtung umfasst einen Prozessor, der so konfiguriert ist, dass er für einen geplanten Betrieb des Quantencomputers an einem vorgegebenen Ort die Schritte des Verfahrens gemäß einer oder mehrerer Ausgestaltungen der Erfindung ausführt.

Gemäß einem dritten Aspekt der vorliegenden Erfindung wird ein Computerprogrammprodukt mit Programmcode vorgeschlagen, der aus einem maschinenlesbaren Träger gespeichert ist, zum Ausführen eines Verfahrens gemäß einer mehrerer Ausgestaltungsvarianten der vorliegenden Erfindung.

Die Erfindung wird nachfolgend näher anhand eines Ausführungsbeispiels in der Zeichnung erläutert.

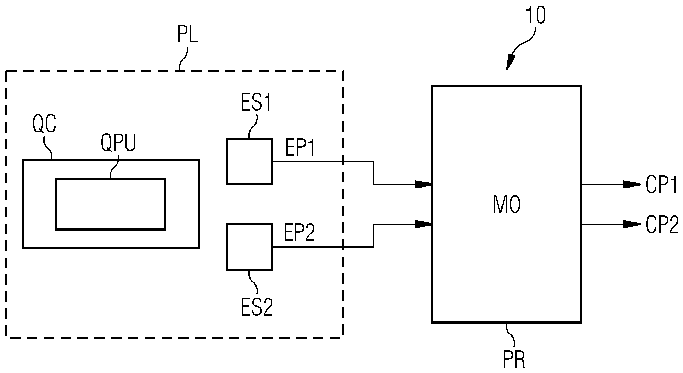

- Fig. 1: zeigt eine schematische Darstellung eines Quantencomputers mit einer Quantenverarbeitungseinheit, umfassend einen Prozessor zur Ausführung einer Ausführungsform der vorliegenden Erfindung.

Fig. 1 zeigt einen Quantencomputer QC mit beispielhaft einer einzigen Quantenverarbeitungseinheit QPU. Die Quantenverarbeitungseinheit QPU kann auf einer beliebigen, bekannten Technologie basieren, um Qubits und ihre Interaktionen zu repräsentieren. Beispielsweise könnte die Quantenverarbeitungseinheit QPU auf supraleitenden Schaltungen, Ionenfallen oder photonischen Schaltkreisen basieren. Die Art der Qubits bestimmt die Technologie, die zum Ansteuern und Auslesen der Qubits in der Quantenverarbeitungseinheit benötigt wird. Davon abhängig sind Eigenschaften wie Kohärenzzeit, Gatter-Operationszeiten und Konnektivität.

Die Quantenverarbeitungseinheit QPU ist durch Leistungsparameter charakterisiert. Die Leistungsparameter umfassen beispielsweise eine Prozessorleistung, einen Arbeitsspeicher, eine Anzahl an Qubits, die Eigenschaften der Qubits, insbesondere eine Vernetzungsrate, eine Kohärenzzeit sowie eine Fehlerrate für jeweilige Gatter-Operationen. Neben den genannten Parametern können die Leistungsparameter auch weitere, die Quantenverarbeitungseinheit QPU charakterisierende Parameter umfassen.

Der Quantencomputer QC mit seiner Quantenverarbeitungseinheit QPU soll an einem vorgegebenen Ort PL, z.B. einem Rechenzentrum, installiert werden, der bestimmten Umgebungseinflüssen ausgesetzt ist. Die Performanz der Quantenverarbeitungseinheit QPU des Quantencomputers QC ist stark von den Umgebungsbedingungen an dem geplanten Ort PL abhängig. So kann die Performanz des Quantencomputers QC und seiner Quantenverarbeitungseinheit QPU insbesondere auf bestimmte Arten von externem Rauschen wie Vibrationen, elektromagnetischen Feldern, Temperaturschwankungen oder kosmischer Strahlung reagieren. Die Auswirkungen auf die Performanz des Quantencomputers hängen stark von der Verwendung der verwendeten Technologie der Quantenverarbeitungseinheit QPU ab, d.h. ob die Quantenverarbeitungseinheit QPU auf supraleitenden Qubits, Ionenfallen oder integrierten Photonenschaltkreisen, usw. basiert.

Um die Performanz des Quantencomputers QC an dem geplanten Ort PL vorhersagen zu können, wird das nachfolgend beschriebene computerimplementierte Verfahren durchgeführt. An dem geplanten Ort PL werden Umgebungsparameter EP1, EP2 erfasst. Die Umgebungsparameter EP1, EP2 können gleicher oder unterschiedlicher Art sein. Die Umgebungsparameter EP1, EP2 werden mit Hilfe von Sensoren ES1, ES2 erfasst, welche dazu ausgebildet sind, z.B. Vibrationen, elektromagnetische Felder, Temperaturen oder Strahlungen, usw. zu erfassen. Die Anzahl der zur Erfassung von Umgebungsparametern verwendeten Sensoren kann größer oder kleiner als die hier dargestellte Anzahl 2 sein. Die Umgebungsparameter EP1, EP2 repräsentieren digitale Werte der messtechnisch erfassten Umgebungswerte.

Die Umgebungsparameter EP1, EP2 werden über eine geeignete Kommunikationsverbindung an einen Prozessor PR übertragen, der ein trainiertes datengetriebenes Modell MO implementiert und die digitalen Umgebungsparameter EP1, EP2 als Eingangsinformationen empfängt und zumindest einen Zustandsparameter CP1, CP2 als digitale Ausgangsinformation bereitstellt. Ein jeweiliger Zustandsparameter CP1, CP2 beschreibt eine Performanz der zumindest einen Quantenverarbeitungseinheit QPU.

Das in dieser Ausführung beschriebene trainierte datengetriebene Modell MO basiert z.B. auf einem neuronalen Netz, das zuvor durch Trainingsdaten angelernt wurde. Die Trainingsdaten umfassen eine Vielzahl von Leistungsparametern der Quantenverarbeitungseinheit QPU zusammen mit der Information über Umgebungsparameter EP1, EP1 und die Performanz beschreibenden Zustandsparametern CP1, CP2.

In der Ausführung gemäß Fig. 1 werden die Zustandsparameter, die die Performanz der Quantenverarbeitungseinheit QPU beschreiben, z.B. auf einer Nutzerschnittstelle (nicht dargestellt) ausgegeben. Die Nutzerschnittstelle umfasst insbesondere ein Display. Die Nutzerschnittstelle stellt Informationen für einen menschlichen Nutzer bereit.

Alternativ oder zusätzlich kann die Ausgangsinformation der Zustandsparameter CP1, CP2 dazu verwendet werden, die Bestimmung der Zustandsparameter zu wiederholen, wenn ein die Performanz beschreibendes Maß unterschritten ist. Dadurch kann beispielsweise der Einfluss von Umgebungsparametern bei hohen Fehlerraten erhöht werden.

Weiter alternativ oder zusätzlich kann die Bestimmung der Zustandsparameter CP1, CP2 für eine Mehrzahl von vorgegeben Orten PLi (wobei i eine Mehrzahl an unterschiedlichen Orten PL beschreibt) wiederholt werden, wenn ein die Performanz beschreibendes Maß des zumindest einen Zustandsparameters CP1, CP2 unterschritten ist. Anhand der Mehrzahl an wiederholten "Simulationen" kann dann der Ort ausfindig gemacht werden, an dem der zumindest eine Zustandsparameter CP1, CP2 ein Maß aufweist, das eine bestmögliche Performanz beschreibt.

Gemäß einer weiteren zweckmäßen Ausgestaltung wird für die zumindest eine Quantenverarbeitungseinheit QPU eine Selbstkalibration durchgeführt, wenn ein die Performanz beschreibendes Maß des zumindest einen Zustandsparameters CP1, CP2 unterschritten ist.

Es ist weiterhin zweckmäßig, wenn im Rahmen der Bestimmung des oder der Zustandsparameter CP1, CP2, insbesondere iterativ, die Bestimmung der Zustandsparameter mit Umgebungsparametern wiederholt wird, die innerhalb einer vorgegebenen Bandbreite um den jeweiligen Messwert variiert werden. Hierdurch können beispielsweise akzeptable Schwankungsbandbreiten für jeweilige Umgebungsparameter ermittelt werden.

Die Erfindung schlägt somit eine digitale Repräsentation des Quantencomputers vor, der eine Simulation der Grundfunktion des Quantencomputers in Abhängig von den Umgebungsbedindungen enthält. Die Umgebungsbedingungen werden mit Hilfe einer Anzahl an Sensoren überwacht. Der Status des Quantencomputers ergibt sich dann aus der Kombination der Simulationen unter Berücksichtigung der Messwerte der Sensoren mit direkten Messungen der relevanten Leistungsindikatoren des Quantencomputers. Beispielsweise können die Auswirkungen von Temperaturen und/oder Vibrationen auf die tatsächlichen Fehlerraten der Qubits ermittelt werden.

Die Verwendung einer digitalen Repräsentation des Quantencomputers in zu simulierenden verschiedenen Umgebungen führt zu Kosteneinsparungen, da Versuch und Irrtum bei der Aufstellung des Quantencomputers in einer potenziell verrauschten Umgebung vermieden werden und die Rekalibrierung und Wartung durch Experten auf ein Minimum beschränkt werden kann.

Die Verwendung einer digitalen Repräsentation einer technischen Einheit ist in der Praxis eine gut verstandene und in der Industrie angewandte Technik. Sie hilft, Auswirkungen der Umgebung auf dem Quantencomputer und deren Auswirkungen auf die Ergebnisse von Quantenberechnungen zu simulieren. Auf diese Weise werden folgende Vorteile erzielt:
Es kann eine optimale Platzierung des Quantencomputers bereits vor der Installation an einem geplanten Ort (z.B. Rechenzentrum) gefunden werden. Die digitale Repräsentation berücksichtigt einzelne Rauschkanäle, die an dem geplanten Ort vorhanden sind, und leitet ihre Auswirkungen auf den spezifischen Typ des verwendeten Quantencomputers ab. Das Wissen um diese Auswirkungen kann helfen, die beste Platzierung für den Quantencomputer zu finden und Maßnahmen zum Schutz des Quantencomputers, wie z.B. magnetische Abschirmungen usw. zu bestimmen. Das Gleiche gilt in umgekehrter Richtung, indem Auswirkungen des Betriebs des Quantencomputers auf Maschinen in der Nähe vorhergesagt werden können, z.B. im Bezug auf elektrische Felder, Vibrationen durch Kühlmittelfluss und dergleichen.

Die Verwendung einer digitalen Repräsentation des Quantencomputers in Verbindung mit Sensoren, die die Umgebungsbedingungen sowie die internen Leistungsindikatoren des Quantencomputers messen, ermöglicht eine Zustandsüberwachung und kann die Notwendigkeit einer Neukalibrierung oder Wartung anzeigen. Diese Informationen können so aufbereitet werden, dass sie auch für nicht fachkundige Benutzer verwendbar sind.

Potenzielle Verfälschungen von Rechenergebnissen aufgrund von Störungen können erkannt und ihre Auswirkung auf die Ergebnisqualität kann abgeschätzt werden. Dies gibt den Benutzern Aufschluss darüber, wie viel Vertrauen sie in Ergebnisse eines Quantencomputers setzen können.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren zum computerimplementierten Vorhersagen der Performanz eines Quantencomputers (QC) mit zumindest einer Quantenverarbeitungseinheit (QPU), wobei die zumindest eine Quantenverarbeitungseinheit durch jeweilige Leistungsparameter charakterisiert ist, wobei für einen geplanten Betrieb des Quantencomputers an einem vorgegebenen Ort (PL) die folgenden Schritte durchgeführt werden:
i) Einlesen zumindest eines Umgebungsparameters (EP1, EP2), wobei der zumindest eine Umgebungsparameter mit einem oder mehreren Sensoren (ES1, ES2) aufgenommen wurde, wobei der oder die Sensoren (ES1, ES2) an dem oder im Bereich des vorgegebenen Orts (PL) installiert sind;
ii) Bestimmen zumindest eines Zustandsparameters (CP1, CP2) der zumindest einen Quantenverarbeitungseinheit (QPU) durch Verarbeiten des zumindest einen Umgebungsparameters (EP1, EP2) durch ein trainiertes datengetriebenes Modell (MO), wobei der zumindest eine Umgebungsparameter (EP1, EP2) als digitale Eingangsinformation in das trainierte datengetriebene Modell (MO) eingespeist wird und das trainierte datengetriebene Modell (MO) den zumindest einen Zustandsparameter (CP1, CP2) als digitale Ausgangsinformation liefert, wobei der zumindest eine Zustandsparameter (CP1, CP2) eine Performanz der zumindest einen Quantenverarbeitungseinheit (QPU) beschreibt.

2. Verfahren nach Anspruch 1, **dadurch gekennzeichnet, dass** das trainierte datengetriebene Modell (MO) ein neuronales Netzwerk ist.

3. Verfahren nach Anspruch 1 oder 2, **dadurch gekennzeichnet, dass** das Bestimmen des zumindest einen Zustandsparameters (CP1, CP2) der zumindest einen Quantenverarbeitungseinheit (QPU) wiederholt wird, wenn ein die Performanz beschreibendes Maß unterschritten ist.

4. Verfahren nach einem der vorhergehenden Ansprüche, **dadurch gekennzeichnet, dass** das Bestimmen des zumindest einen Zustandsparameters (CP1, CP2) der zumindest einen Quantenverarbeitungseinheit (QPU) für eine Mehrzahl von vorgegebenen Orten (PLi) wiederholt wird, wenn ein die Performanz beschreibendes Maß des zumindest einen Zustandsparameters (CP1, CP2) unterschritten ist.

5. Verfahren nach einem der vorhergehenden Ansprüche, **dadurch gekennzeichnet, dass** für die zumindest eine Quantenverarbeitungseinheit (QPU) des Quantencomputers (QC) eine Selbstkalibration durchgeführt wird, wenn ein die Performanz beschreibendes Maß des zumindest einen Zustandsparameters (CP1, CP2) unterschritten ist.

6. Verfahren nach einem der vorhergehenden Ansprüche, **dadurch gekennzeichnet, dass** der zumindest eine Zustandsparameter (CP1, CP2) eine Fehlerrate für jeweilige Gatter-Operationen umfasst.

7. Verfahren nach einem der vorhergehenden Ansprüche, **dadurch gekennzeichnet, dass** der zumindest eine Umgebungsparameter (EP1, EP2) innerhalb einer vorgegebenen Bandbreite um den jeweiligen Messwert variiert wird und für jede Variation der zumindest eine Zustandsparameter (CP1, CP2) bestimmt wird.

8. Vorrichtung (10) zum computerimplementierten Vorhersagen der Performanz eines Quantencomputers (QC) mit zumindest einer Quantenverarbeitungseinheit (QPU), wobei die zumindest eine Quantenverarbeitungseinheit durch jeweilige Leistungsparameter (LP) charakterisiert ist, wobei die Vorrichtung einen Prozessor (PR) umfasst, der so konfiguriert ist, dass er für einen geplanten Betrieb des Quantencomputers an einem vorgegebenen Ort (PL) die folgenden Schritte ausführt:
i) Einlesen zumindest eines Umgebungsparameters (EP1, EP2), wobei der zumindest eine Umgebungsparameter mit einem oder mehreren Sensoren (ES1, ES2) aufgenommen wurde, wobei der oder die Sensoren (ES1, ES2) an dem oder im Bereich des vorgegebenen Orts (PL) installiert sind;
ii) Bestimmen zumindest eines Zustandsparameters (CP1, CP2) der zumindest einen Quantenverarbeitungseinheit (QPU) durch Verarbeiten des zumindest einen Umgebungsparameters (EP1, EP2) durch ein trainiertes datengetriebenes Modell (MO), wobei der zumindest eine Umgebungsparameter (EP1, EP2) als digitale Eingangsinformation in das trainierte datengetriebene Modell (MO) eingespeist wird und das trainierte datengetriebene Modell (MO) den zumindest einen Zustandsparameters (CP1, CP2) als digitale Ausgangsinformation liefert, wobei der zumindest eine Zustandsparameter (CP1, CP2) eine Performanz des zumindest einen Quantenverarbeitungseinheit (QPU) beschreibt.

9. Vorrichtung nach Anspruch 8, wobei die Vorrichtung so konfiguriert ist, dass es ein Verfahren nach einem der Ansprüche 2 bis 7 durchführt.

10. Computerprogrammprodukt mit Programmcode, der auf einem maschinenlesbaren Träger gespeichert ist, zum Ausführen eines Verfahrens nach einem der Ansprüche 1 bis 7, wenn der Programmcode auf einem Computer ausgeführt wird.
